(19) Europäisches Patentamt
European Patent Office
Office européen des brevets

(11) EP 4 471 625 A1

(12) **EUROPEAN PATENT APPLICATION**
published in accordance with Art. 153(4) EPC

(43) Date of publication:
04.12.2024 Bulletin 2024/49

(51) International Patent Classification (IPC):
*G06F 17/15* (2006.01)

(21) Application number: 22923389.5

(52) Cooperative Patent Classification (CPC):
G01T 1/34; G01T 1/36; G06F 17/15; G06F 30/25

(22) Date of filing: 10.11.2022

(86) International application number:
PCT/CN2022/131119

(87) International publication number:
WO 2023/142595 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.01.2022 PCT/CN2022/074953

(71) Applicant: Liu, Changyuan
Shenyang, Liaoning 110021 (CN)

(72) Inventor: Liu, Changyuan
Shenyang, Liaoning 110021 (CN)

(74) Representative: Herzog IP Patentanwalts GmbH
Steinstraße 16-18
40212 Düsseldorf (DE)

(54) **METHOD FOR CALCULATING PARTICLE TRANSPORT NUCLEAR REACTION CROSS SECTION AND PATH INTEGRAL, APPARATUS AND DEVICE**

(57) The present application discloses a method and apparatus for computing a nuclear reaction cross section and a path integral in particle transport, an electronic device, and a storage medium. The method includes: obtaining a product of a macroscopic nuclear reaction cross section of a material and an additional function by using a linear combination of basis functions; and obtaining a path integral of the product of the macroscopic nuclear reaction cross section of the material and the additional function by using the linear combination of basis functions. The additional function is a function of spatial position and energy, where the domain of the function is a set of points in space and a set of non-negative real number energy, and the range of the function is complex numbers or vectors of the complex numbers. Embodiments disclosed in the present application provide a supplementary computation method for a situation where an additional function appears or multigroup cross sections are used in computing a nuclear reaction cross section and a path integral in particle transport by using a linear combination of basis functions.

FIG. 1

**Description**

**FIELD OF INVENTION**

The present application relates to the field of particle transport, and in particular, to a method and apparatus for computing a nuclear reaction cross section and a path integral in particle transport, an electronic device, and a storage medium.

**BACKGROUND OF INVENTION**

Particle transport is a phenomenon that describes the passage of microscopic particles in a medium. The study of particle transport is very important for analyzing and understanding the behavior of microscopic particles and has a wide range of modem applications. With the advancement of computer computation power, high-fidelity reactor numerical computation has become possible. In high-fidelity reactor numerical computations, one computational bottleneck is the statistical problem of particle transport in inhomogeneous media. In this field, one existing method is the collision statistical method, which is unstable in numerical computations and cannot handle vacuum materials; and another existing method is the path integral statistical method, which is not yet sufficient to be applied to inhomogeneous media.

In addition, related technologies have proposed that linear combinations of basis functions can be used to compute nuclear reaction cross sections and path integrals in particle transport. However, computations relating to more complex object functions still need to be further studied.

The above content is merely background information related to the present application known to the inventor and does not constitute an admission of prior art.

**SUMMARY**

With this regard, embodiments of the present application provide a method and apparatus for computing a nuclear reaction cross section and a path integral in particle transport, an electronic device, and a computer readable storage medium, for use in solving at least one technical problem.

According to the first aspect, the embodiments of the present application provide a method for computing a nuclear reaction cross section and a path integral in particle transport, including:

obtaining a product of a macroscopic nuclear reaction cross section of a material and an additional function by using a linear combination of basis functions; and

obtaining a path integral of the product of the macroscopic nuclear reaction cross section of the material and the additional function by using the linear combination of basis functions.

The additional function is a function of spatial position and energy, where the domain of the function is a set of points in space and a set of non-negative real number energy, and the range of the function is complex numbers or vectors of the complex numbers.

According to the second aspect, the embodiments of the present application provide a particle transport equation solving method, including using the method above to perform at least one of the following: Monte Carlo particle transport computation, method of characteristics-based particle transport computation, discrete ordinates method-based particle transport computation, and solving for other scientific computation problems.

According to the third aspect, the embodiments of the present application provide an apparatus for computing a nuclear reaction cross section and a path integral in particle transport, including:

a first computation module, configured to obtain a product of a macroscopic nuclear reaction cross section of a material and an additional function by using a linear combination of basis functions; and

a second computation module, configured to obtain a path integral of the product of the macroscopic nuclear reaction cross section of the material and the additional function by using the linear combination of basis functions.

The additional function is a function of spatial position and energy, where the domain of the function is a set of points in space and a set of non-negative real number energy, and the range of the function is complex numbers or vectors of the complex numbers.

According to the fourth aspect, the embodiments of the present application provide an electronic device, including: a processor and a memory having computer program instructions stored thereon, where when executing the computer program instructions, the electronic device implements the method above.

According to the fifth aspect, the embodiments of the present application provide a computer readable storage medium, having computer program instructions stored thereon, where when executed by a processor, the computer program instructions implement the method above.

The solution provided in the embodiments of the present application solves the problem of path integral computation of functions containing cross sections in inhomogeneous media by separating cross-section dependence in path integral computation, and improves the path integral statistical method so that the method can be applied to the statistical problems of particle transport in inhomogeneous media.

## BRIEF DESCRIPTION OF DRAWINGS

To describe the technical solutions in embodiments of the present application more clearly, the accompanying drawings required for describing the embodiments of the present application are briefly introduced below. Apparently, the accompanying drawings in the following description show merely some embodiments of the present application, and a person of ordinary skill in the art can still derive other accompanying drawings from these accompanying drawings without an inventive effort.

FIG. 1 is a flow block diagram of a method for computing a nuclear reaction cross section and a path integral in particle transport according to embodiments of the present application;

FIG. 2 is a schematic diagram of the structure of an apparatus for computing a nuclear reaction cross section and a path integral in particle transport according to the embodiments of the present application; and

FIG. 3 is a schematic diagram of the hardware structure of an electronic device for implementing a method for computing a nuclear reaction cross section and a path integral in particle transport according to the embodiments of the present application.

## DETAILED DESCRIPTION

The principle and spirit of the present application will be described below with reference to several exemplary embodiments. It should be understood that the purpose of providing these embodiments is to make the principle and spirit of the present application clearer and more thorough, so that a person skilled in the art can better understand and implement the principle and spirit of the present application. The exemplary embodiments provided herein are only some embodiments of the present application, rather than all embodiments. Based on the embodiments herein, all other embodiments obtained by a person of ordinary skill in the art without involving an inventive effort shall fall within the scope of protection of the present application.

A person skilled in the art knows that the embodiments of the present application may be implemented as a method, an apparatus, an electronic device, and a storage medium. Therefore, the present disclosure may be specifically implemented in at least one of the following forms: complete hardware, complete software (including firmware, resident software, microcode, etc.), or a combination of hardware and software.

According to the embodiments of the present application, the present application sets forth a method and apparatus for computing a nuclear reaction cross section and a path integral in particle transport, an electronic device, and a storage medium.

Herein, terms such as "first" and "second" are only used to distinguish one entity (or operation) from another entity (or operation), but not used to require or imply any order or relationship between these entities (or operations). Herein, elements (such as parts, components, processes, and steps) defined by the phrase "including..." do not exclude elements other than the listed elements, that is, other elements not explicitly listed may also be included. Herein, any elements and the numbers thereof in the drawings are used for illustration rather than limitation, and any names in the drawings are only used for distinction and do not have any limiting meanings.

The following is a detailed explanation of the principle and spirit of the present application with reference to several exemplary or representative embodiments of the present application.

First, a brief description is given of the concepts, technical terms and other related contents that may be involved in the embodiments of the present application.

I. Particle flux density

The number density of particles having energy $E$ at a spatial position $\vec{x}$ is $N(\vec{x}, E)$, where the number density refers to the number of particles having energy $E$ per unit volume at the position $\vec{x}$. At the same time, it is assumed that the particles have a moving speed v(F), where the speed is a scalar and is a function of the energy E. On this basis, the particle flux density is defined by the following equation, which represents a product of the speed and the particle number density.

$$\phi(\vec{x}, E) = v(E) N(\vec{x}, E)$$

II. Macroscopic and microscopic nuclear reaction cross sections

For any material having $N$ components, each component is called as a sub-material. The sub-material may refer to a nuclide, an element, a molecule or the like. Therefore, a macroscopic nuclear reaction cross section $\Sigma(E, T)$ of a material may be expressed as the sum of the products of microscopic nuclear reaction cross sections of various sub-materials and corresponding number densities, as shown below:

$$\Sigma(E, T) = \sum_{i=1}^{N} a_i\, \sigma_i(E, T)$$

where $i$ is an index of the sub-material and $i = 1, 2, 3 ...,$ or $N$, $a_i$ is defined as the number density of the ith-type sub-material, $\sigma_i(E, T)$ is a microscopic nuclear reaction cross section of the ith-type sub-material, $E$ is particle energy, and $T$ is the temperature of the material.

In space $V$, if the material is an inhomogeneous medium, then the temperature, the microscopic nuclear reaction cross section, the sub-material number density, and the macroscopic nuclear reaction cross section are all functions of the spatial position $\vec{x}$, as shown in the following equation:

$$\Sigma(E, \vec{x}) = \sum_{i=1}^{N} a_i(\vec{x}) \sigma_i\big(E, T(\vec{x})\big)$$

III. Cross section energy dependence

In this field, the microscopic nuclear reaction cross section $\sigma(E, T)$ of a sub-material including the nuclide, the element, or the molecule has a complex energy dependence, and the energy dependence varies greatly in different sub-materials. Moreover, the macroscopic nuclear reaction cross section has a more complex energy dependence than a single sub-material, and the complexity of the energy dependence may impede path integral computation involving the macroscopic cross section.

IV. Collision statistical method in a Monte Carlo algorithm

At present, a commonly used statistical method in particle transport is the collision statistical method. In the method, it is assumed that particles undergo $Q$ collision events within a unit time $\Delta\tau$ in space $V$, and the position of the qth collision event is $\vec{x_q}$, where $q = 1, 2, 3 ...,$ or $Q$. Then the integral of the product of the particle flux density and any object function $u(E, \vec{x})$ within a unit time $\Delta\tau$ in space $V$ can be approximated using the following equation.

$$\Delta\tau \int_V u(E, \vec{x}) \phi(\vec{x}, E) d\vec{x} \approx \sum_{q=1}^{Q} \frac{u\big(E, \vec{x_q}\big)}{\Sigma_t\big(E, \vec{x_q}\big)}$$

The equation represents a path integral collision statistical method for particle transport. $\Sigma_t(E, \vec{x_q})$ is the macroscopic total nuclear reaction cross section of the material at position $\vec{x_q}$ for particles having energy $E$. It can be seen that when the macroscopic total nuclear reaction cross section is zero, the equation cannot be used for computation, and when the macroscopic total nuclear reaction cross section is small, the value is unstable.

V. Path integral statistical method in the Monte Carlo algorithm

In the Monte Carlo algorithm for particle transport, in any given space $V$, there are $P$ particles traveling therein, and a particle traveling path having an index $p$ is $C_p$, where the path may be a curve; the path may not run through the space *V,* that is, the path may end in the space *V* without leaving the space, or the path may start in the space *V* instead of entering from the outside of the space; and the path length is $l_p$, where the index $p$ = 1, 2, 3 ..., or *P.* Then, the integral of the particle flux density in space *V* within the unit time $\Delta\tau$ can be approximately expressed as the sum of the path lengths of *P* particles using the following equation.

$$\Delta\tau \int_V \phi(\vec{x}, E)\, d\vec{x} \approx \sum_{p=1}^{P} \oint_{C_p} ds = \sum_{p=1}^{P} l_p \qquad (a)$$

If the particle flux density is multiplied by any object function $u(E, \vec{x})$, then the spatial integral of the product can be approximately expressed using the following equation.

$$\Delta\tau \int_V u(E, \vec{x})\phi(\vec{x}, E)\, d\vec{x} \approx \sum_{p=1}^{P} \oint_{C_p} u\big(E, \vec{x}(s)\big) ds \qquad (b)$$

The equation above represents a path integral statistical method for particle transport. Here, "statistical" refers to computing the integral of the product of particle flux density and any object function using the equation above. The physical quantities or numerical indicators that can be statistically analyzed using the integral include: particle flux, particle reaction rate, power, etc.

When the object function represents a constant 1, that is, $u(E, \vec{x}) = 1$, Equation (b) degenerates into Equation (a), which relates to computation of $\Delta\tau \int_V \varphi(\vec{x}, E)\, d\vec{x}$, that is, the particle flux in space *V.*

When the object function represents any macroscopic nuclear reaction cross section, that is, $u(E, \vec{x}) = \Sigma(E, \vec{x})$, Equation (b) becomes Equation (c), which relates to computation of the reaction rate of any nuclear reaction. The nuclear reaction here can be, but is not limited to, elastic scattering, inelastic scattering, particle capture, fission, etc.

$$\Delta\tau \int_V \Sigma(E, \vec{x})\phi(\vec{x}, E)\, d\vec{x} \approx \sum_{p=1}^{P} \oint_{C_p} \Sigma\big(E, \vec{x}(s)\big) ds \qquad (c)$$

In particular, when the object function represents a macroscopic fission reaction cross section, that is, $u(E, \vec{x}) = \Sigma_f(E, \vec{x})$, Equation (b) becomes Equation (d), which relates to computation of a fission reaction rate, where the value is proportional to power in space *V,* that is, energy generated in space *V.*

$$\Delta\tau \int_V \Sigma_f(E, \vec{x})\phi(\vec{x}, E)\, d\vec{x} \approx \sum_{p=1}^{P} \oint_{C_p} \Sigma_f\big(E, \vec{x}(s)\big) ds \qquad (d)$$

In the above description concerning the power in space *V,* for the sake of convenience, it is assumed that the energies released when incident particles undergo the fission reaction with different sub-materials at different energies is the same. If the energies are different, the definition of the power will be slightly different from Equation (d), and the different fission energies of each type of different sub-material at different incident particle energies need to be considered separately.

Of course, the object function can also be a more complex function, for example, the object function represents the product of the macroscopic nuclear reaction cross section and an additional function $r(E, z)$, that is, $u(E, \vec{x}) = r(E, \vec{x})\Sigma(E, \vec{x})$, in which case Equation (b) becomes Equation (e). As shown below, equation (e) is very important for computing the spatial distribution of the nuclear reaction rate.

$$\Delta\tau \int_V r(E, \vec{x})\Sigma(E, \vec{x})\phi(\vec{x}, E)\, d\vec{x} \approx \sum_{p=1}^{P} \oint_{C_p} r\big(E, \vec{x}(s)\big)\Sigma\big(E, \vec{x}(s)\big) ds \qquad (e)$$

From the above, it can be seen that when it is assumed that $r(E, \vec{x}(s)) = 1$, Equation (c) can be obtained through Equation (e); and

when it is assumed that $r(E, \vec{x}(s)) = 1$ and $\Sigma(E, T(\vec{x})) = \Sigma_f(E, T(\vec{x}))$, Equation (d) can be obtained through Equation (e).

It should be noted that the integrand function in the path $C_p$ intergral in Equation (e) contains the macroscopic nuclear reaction cross section, and then when the material on the path is variable, that is, the particles are transported in an inhomogeneous medium, the macroscopic nuclear reaction cross section also varies along the path.

In particular, by setting the object function to be a component function in a function expansion counting method or a product of the component function and the macroscopic nuclear reaction cross section, the spatial distribution of physical quantities or numerical indicators can be computed.

Firstly, function expansion is defined. Any function $h(\vec{x})$ defined in space $V$ can be expanded in the space by using a set of component functions and the integral can be approximated by using the sum. As shown in Equation (f), a set of $T$ given component functions $F_t(\vec{x})$ is used, where $t = 1, 2, 3 ...,$ or $T$ and $h_t$ is the coefficient of the $t$th component function. If necessary, the space $V$ can be expanded to the domain $\tilde{V}$ required by the component functions.

$$h(\vec{x}) \approx \sum_{t=1}^{T} h_t F_t(\vec{x}) \qquad \text{(f)}$$

When the component functions $F_t(\vec{x})$ form a set of orthogonal conditions that satisfy Equation (g), the coefficients of the component functions can be expressed using Equation (h). In Equation (g), if $t_1 = t_2$, the value of the function $\delta_{t_1 t_2}$ is 1, otherwise, the value is 0.

$$\int_V F_{t_1}(\vec{x}) F_{t_2}(\vec{x}) d\vec{x} = \delta_{t_1 t_2} \qquad \text{(g)}$$

$$h_t = \int_V F_t(\vec{x}) h(\vec{x}) d\vec{x} \qquad \text{(h)}$$

Secondly, when the spatial distribution of the particle flux density needs to be obtained, the particle flux density $\varphi(\vec{x}, E)$, as shown by Equation (f), can be expanded into Equation (i), and it is assumed that the component function $F_t(\vec{x})$ is also a function of the energy $E$, namely $F_t(E, \vec{x})$. $t = 1, 2, 3 ...,$ or $T$. $\varphi_t(E)$ is the coefficient of the $t$th component function, and can be expressed as Equation (j) according to Equation (h). Further, according to Equation (c), and by setting the object function $u(E, \vec{x}) = F_t(E, \vec{x})$, the component function coefficient $\varphi_t(E)$ can be approximated through the path integral as shown in Equation (k).

$$\phi(\vec{x}, E) \approx \sum_{t=1}^{T} \phi_t(E) F_t(E, \vec{x}) \qquad \text{(i)}$$

$$\phi_t(E) = \int_V F_t(E, \vec{x}) \phi(\vec{x}, E) d\vec{x} \qquad \text{(j)}$$

$$\Delta\tau \, \phi_t(E) = \Delta\tau \int_V F_t(E, \vec{x}) \phi(\vec{x}, E) d\vec{x} \approx \sum_{p=1}^{P} \oint_{C_p} F_t(E, \vec{x}(s)) ds \qquad \text{(k)}$$

Thirdly, when the spatial distribution of the nuclear reaction rate needs to be obtained, the nuclear reaction rate, that is, the product of the macroscopic nuclear reaction cross section $\Sigma(E, z)$ and the particle flux density $\varphi(\vec{x}, E)$ $R(\vec{x}, E) = \Sigma(E, \vec{x})\varphi(\vec{x}, E)$, as shown by Equation (f), can be expanded into Equation (l), where the component function $F_t(E, \vec{x})$ can also be a function of energy.

$$R(\vec{x}, E) \approx \sum_{t=1}^{T} R_t(E) F_t(E, \vec{x}) \qquad \text{(l)}$$

$t = 1, 2, 3 ...,$ or $T$. $R_t(E)$ is the coefficient of the $t$th component function.

According to Equation (h), Equation (l) can be expressed as Equation (m).

$$R_t(E) = \int_V F_t(E, \vec{x})R(\vec{x}, E)d\vec{x} \qquad (m)$$

Further, according to Equation (c), and by setting the object function $u(E, \vec{x}) = F_t(E, \vec{x})\Sigma(E, \vec{x})$, the component function coefficient $R_t(E)$ can be approximated through the path integral as shown in Equation (n).

$$\Delta\tau\, R_t(E) = \Delta\tau \int_V F_t(E, \vec{x})R(\vec{x}, E)d\vec{x} = \Delta\tau \int_V F_t(E, \vec{x})\Sigma(E, \vec{x})\phi(\vec{x}, E)d\vec{x}$$

$$\approx \sum_{p=1}^{P} \oint_{C_p} F_t\big(E, \vec{x}(s)\big)\Sigma\big(E, \vec{x}(s)\big)ds \qquad (n)$$

When it is assumed that $r(E, \vec{x}(s)) = F_t(E, \vec{x}(s))$, Equation (n) can be obtained through Equation (e).

From the examples above, the importance of the path integral $\oint_{C_p} r(E, \vec{x}(s))\Sigma(E, \vec{x}(s))ds$ in Equation (e) to reactor physics computation can be seen.

However, the integrand function in the path $C_p$ integral in Equation (e) contains the macroscopic nuclear reaction cross section, and then when the material on the path is variable, that is, the particles are transported in an inhomogeneous medium, the macroscopic nuclear reaction cross section also varies along the path. Since the complex cross section energy dependence makes integral computation difficult, in existing technologies, it can only be assumed that the macroscopic nuclear reaction cross sections are constants under given energies on given paths, and the existing technologies cannot deal with the problem of particle transport in inhomogeneous media.

### Inventive concept

For a function containing a cross section, such as a product of a macroscopic cross section and an additional function $r(E, \vec{x}(s))\Sigma(E, \vec{x}(s))$, the present invention proposes a method for computing the path integral by separating the cross section energy dependence when the function is not a constant. The method can deal with the statistical problem of particle transport in inhomogeneous media, which is of practical significance.

### Exemplary methods

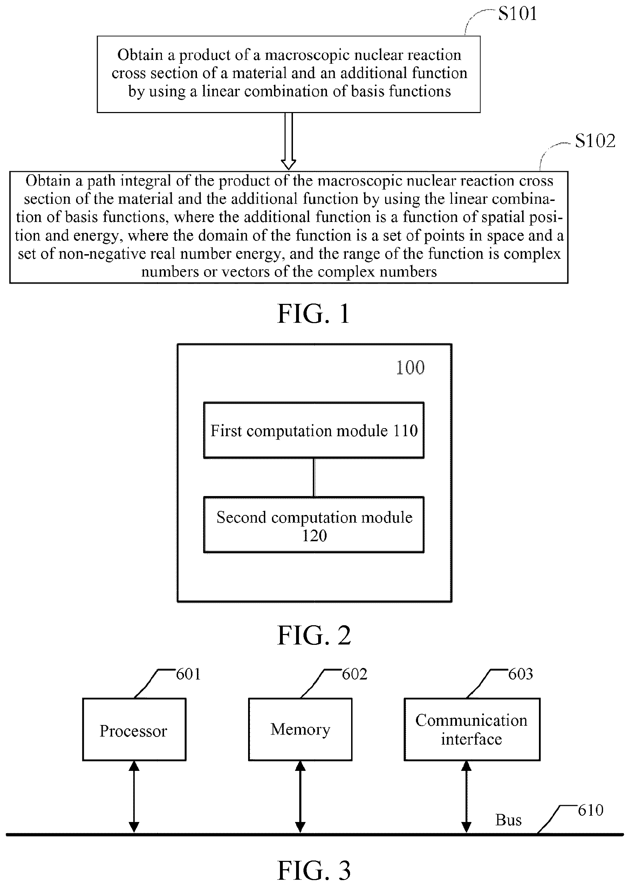

FIG. 1 is a flow diagram of a method for computing a nuclear reaction cross section and a path integral in particle transport provided in embodiments of the present application. The method includes:

S101, obtaining a product of a macroscopic nuclear reaction cross section of a material and an additional function by using a linear combination of basis functions; and

S 102, obtaining a path integral of the product of the macroscopic nuclear reaction cross section of the material and the additional function by using the linear combination of basis functions. The additional function is a function of spatial position and energy, where the domain of the function is a set of points in space and a set of non-negative real number energy, and the range of the function is complex numbers or vectors of the complex numbers.

The method for computing a nuclear reaction cross section and a path integral in particle transport provided in the present invention can be used to replace the collision statistical method in inhomogeneous medium transport, making computation possible in a situation where the total reaction cross section is very small or zero, and avoiding unstable numerical computation.

In some embodiments, optionally, the obtaining a product of a macroscopic nuclear reaction cross section of a material and an additional function by using a linear combination of basis functions includes:

as shown in Equation (1), obtaining the macroscopic nuclear reaction cross section $\Sigma(E, \vec{x})$ by using the linear combination of basis functions:

$$\Sigma(E,\vec{x}) \approx \sum_{i=1}^{N}\sum_{j=1}^{M_i} a_i(\vec{x})c_{i,j}\big(T(\vec{x})\big)\sigma_{i,j}(E) \qquad (1)$$

where $N$ is the number of different types of sub-materials of the material, $M_i$ is the number of basis functions of the $i$th-type sub-material, $a_i(\vec{x})$ is the number density of the $i$th-type sub-material, and when the material is a non-homogeneous medium, $a_i(\vec{x})$ is a function of a spatial position $\vec{x}$, $\sigma_{i,j}(E)$ is the $j$th basis function of the $i$th-type sub-material, $c_{i,j}(T(\vec{x}))$ is a coefficient of the $j$th basis function of the $i$th-type sub-material, $i=1, 2, 3, \dots$ or $N$, and $j=1, 2, 3, \dots$ or $M_i$; and

as shown in Equation (2), obtaining the product of the macroscopic nuclear reaction cross section and the additional function by using the linear combination of basis functions:

$$r(E,\vec{x})\Sigma(E,\vec{x}) \approx \sum_{i=1}^{N}\sum_{j=1}^{M_i} r(E,\vec{x})a_i(\vec{x})c_{i,j}\big(T(\vec{x})\big)\sigma_{i,j}(E) \qquad (2)$$

where $r(E, z)$ is the additional function.

In some embodiments, optionally, Equation (2) is integrated on a path $C$, and the path integral of the product of the macroscopic nuclear reaction cross section of the material and the additional function is obtained by using the linear combination of basis functions:

$$\oint_C r(E,\vec{x}(s))\Sigma(E,\vec{x}(s))ds$$
$$\approx \sum_{i=1}^{N}\sum_{j=1}^{M_i}\left(\oint_C r(E,\vec{x}(s))a_i(\vec{x}(s))c_{i,j}\big(T(\vec{x}(s))\big)\,ds\right)\sigma_{i,j}(E) \qquad (3)$$

where the energy is $E$, the temperature is $T(\vec{x})$ and the temperature is a function of a point position $\vec{x}$ in space, a variable $s$ is taken as a parameter of the path $C$, the path $C$ is curved or straight, and $\vec{x}(s)$ is a point position at the parameter $s$ on the path.

In some embodiments, optionally, when a multi-group cross section is used, the energy $E$ in Equation (3) is replaced by an energy group $g$, and then Equation (3) is transformed into Equation (4):

$$\oint_C r_g(\vec{x}(s))\Sigma_g(\vec{x}(s))ds \approx \sum_{i=1}^{N}\sum_{j=1}^{M_i}\left(\oint_C r_g(\vec{x}(s))a_i(\vec{x}(s))c_{i,j}\big(T(\vec{x}(s))\big)\,ds\right)\sigma_{i,j,g} \qquad (4)$$

where a macroscopic nuclear reaction cross section of the energy group $g$ is $\Sigma_g(\vec{x}(s))$, the basis function corresponding to the energy group $g$ is $\sigma_{i,j,g}$, and the additional function corresponding to the energy group $g$ is $r_g(\vec{x}(s))$.

In some embodiments, optionally, the method for computing a nuclear reaction cross section and a path integral in particle transport further includes expressing the nuclear reaction cross section and the path integral obtained by polynomial expansion as the linear combination of basis functions.

The polynomial expansion is to express the function as a polynomial.

In some embodiments, optionally, the expressing the nuclear reaction cross section and the path integral obtained by polynomial expansion as the linear combination of basis functions includes:

obtaining the product of the macroscopic nuclear reaction cross section of the material and the additional function through cross section temperature polynomial expansion;

expressing the macroscopic nuclear reaction cross section obtained by cross section temperature polynomial expansion as the linear combination of basis functions;

expressing the product of the macroscopic nuclear reaction cross section and the additional function obtained by cross section temperature polynomial expansion as the linear combination of basis functions; and

expressing the path integral of the product of the macroscopic nuclear reaction cross section and the additional function obtained by cross section temperature polynomial expansion as the linear combination of basis functions.

In some embodiments, optionally, the obtaining the product of the macroscopic nuclear reaction cross section of the material and the additional function through cross section temperature polynomial expansion includes:

as shown in Equation (5), obtaining a microscopic nuclear reaction cross section by using temperature polynomial expansion:

$$\sigma(E, T) \approx \sum_{l=1}^{L} b_l(E) T^{\beta_l} \qquad (5)$$

where $\sigma(E, T)$ is the microscopic nuclear reaction cross section, $L$ is the number of terms in the polynomial, and $l$ is an index of the polynomial term and $l = 1, 2, 3 ...,$ or $L$, where the $l$th term coefficient $b_l(E)$ is a function of particle energy $E$, $\beta_l$ is the degree of the lth term, and $\beta_l$ may be any value;

as shown in Equation (6), obtaining the macroscopic nuclear reaction cross section of the material by using temperature polynomial expansion, where the macroscopic nuclear reaction cross section of the material is the sum of the products of microscopic nuclear reaction cross sections of various sub-materials and corresponding number densities, as shown in Equation (7):

$$\Sigma(E, T) \approx \sum_{i=1}^{N} \sum_{l=1}^{L_i} a_i \, b_{i,l}(E) T^{\beta_{i,l}} \qquad (6)$$

where the lth term coefficient $b_{i,l}(E)$ is a function of particle energy $E$, $\beta_{i,l}$ is the degree of the $l$th term of the $i$th-type sub-material, and $\Sigma(E, T)$ is the macroscopic nuclear reaction cross section;

$$\Sigma(E, T) = \sum_{i=1}^{N} a_i \, \sigma_i(E, T) \qquad (7)$$

where $i$ is an index of the sub-material and $i = 1, 2, 3 ... N$, $\sigma_i(E, T)$ is the microscopic nuclear reaction cross section of the ith-type sub-material, $E$ is particle energy, and $T$ is the temperature of the material;

where Equation (6) is expressed as Equation (8) at the spatial position $\vec{x}$:

$$\Sigma(E, \vec{x}) \approx \sum_{i=1}^{N} \sum_{l=1}^{L_i} a_i(\vec{x}) b_{i,l}(E) T^{\beta_{i,l}}(\vec{x}) \qquad (8)$$

as shown in Equation (9), obtaining the product of the microscopic nuclear reaction cross section and the additional function $r(E, z)$ by using temperature polynomial expansion:

$$r(E, \vec{x}) \Sigma(E, \vec{x}) \approx \sum_{i=1}^{N} \sum_{l=1}^{L_i} r(E, \vec{x}) a_i(\vec{x}) b_{i,l}(E) T^{\beta_{i,l}}(\vec{x}) \qquad (9)$$

where Equation (9) represents the product of the macroscopic nuclear reaction cross section and the additional function.

In some embodiments, optionally, the expressing the macroscopic nuclear reaction cross section obtained by cross section temperature polynomial expansion as the linear combination of basis functions includes:

defining Equation (10), Equation (11), and Equation (12) as follows:

$$M_i = L_i \qquad (10)$$

$$c_{i,j}\big(T(\vec{x})\big) = T^{\beta_{i,l}}(\vec{x}) \qquad (11)$$

$$\sigma_{i,j}(E) = b_{i,l}(E) \qquad (12)$$

using the definitions of Equation (10), Equation (11), and Equation (12), replacing the index *l* with the index *j,* and transforming Equation (8) into Equation (13):

$$\Sigma(E,\vec{x}) \approx \sum_{i=1}^{N}\sum_{j=1}^{M_i} a_i(\vec{x})c_{i,j}\big(T(\vec{x})\big)\sigma_{i,j}(E) \qquad (13)$$

where $\sigma_{i,j}(E)$ is the *j*th basis function of the ith-type sub-material.

In some embodiments, optionally, the expressing the product of the macroscopic nuclear reaction cross section and the additional function obtained by cross section temperature polynomial expansion as the linear combination of basis functions includes:

using the definitions of Equation (10), Equation (11), and Equation (12), replacing the index *l* with the index *j,* and transforming Equation (9) into Equation (14):

$$r(E,\vec{x})\Sigma(E,\vec{x}) \approx \sum_{i=1}^{N}\sum_{j=1}^{M_i} r(E,\vec{x})a_i(\vec{x})c_{i,j}\big(T(\vec{x})\big)\sigma_{i,j}(E) \qquad (14)$$

where Equation (14) represents the product of the macroscopic nuclear reaction cross section and the additional function by using the linear combination of basis functions.

In some embodiments, optionally, the expressing the path integral of the product of the macroscopic nuclear reaction cross section and the additional function obtained by cross section temperature polynomial expansion as the linear combination of basis functions includes:

integrating Equation (9) on the path *C* to obtain Equation (15):

$$\oint_C r\big(E,\vec{x}(s)\big)\Sigma\big(E,\vec{x}(s)\big)ds$$
$$\approx \sum_{i=1}^{N}\sum_{l=1}^{L_i}\left(\oint_C r\big(E,\vec{x}(s)\big)a_i\big(\vec{x}(s)\big)T^{\beta_{i,l}}\big(\vec{x}(s)\big)ds\right)b_{i,l}(E) \qquad (15)$$

using the definitions of Equation (10), Equation (11), and Equation (12), replacing the index *l* with the index *j,* and transforming Equation (15) into Equation (16):

$$\oint_C r\big(E,\vec{x}(s)\big)\Sigma\big(E,\vec{x}(s)\big)ds$$

$$\approx \sum_{i=1}^{N}\sum_{j=1}^{M_i}\left(\oint_C r\big(E,\vec{x}(s)\big)a_i\big(\vec{x}(s)\big)c_{i,j}\Big(T\big(\vec{x}(s)\big)\Big)\;ds\right)\sigma_{i,j}(E) \qquad (16)$$

where $\sigma_{i,j}(E)$ is the linear combination of basis functions, and Equation (16) represents the path integral of the product of the macroscopic nuclear reaction cross section and the additional function obtained by using the linear combination of basis functions.

According to the method for computing a nuclear reaction cross section and a path integral in particle transport provided in the present invention, in terms on the right sides of the Approximately-Equal signs in expressions using the linear combination of basis functions including Equation (16) and Equation (15), the integral $\oint_C r(E,\vec{x}(s))a_i(\vec{x}(s))c_{i,j}(T(\vec{x}(s)))$ ds or $\oint_C r(E,\vec{x}(s))a_i(\vec{x}(s))T^{\beta i,l}(\vec{x}(s))ds$ on the path C does not contain the cross section, and the cross section has a complex energy dependence, such that the complexity of integral computation is reduced. Moreover, on any path, the basis function $\sigma_{i,j}(E)$ or $b_{i,l}(E)$ or $\sigma_{i,j,g}$ does not vary along with the position on the path, and thus can be placed outside the path integral term as shown in Equation (4), Equation (15), and Equation (16), without participating in computation of the path integral. By separating the cross section dependence, under the same other conditions, the path integral of the product of the macroscopic nuclear reaction cross section and the additional function in an inhomogeneous medium can be computed using 2, 3, 5, 10, 25 or 100 times the computational amount compared with homogeneous media. Under current technical conditions, this improvement in computation performance is significant.

To facilitate understanding, several specific examples are provided below.

1. Microscopic cross section polynomial expansion

A microscopic cross section has the form of temperature polynomial expansion as shown in the following equation, where the power of the polynomial is an integer multiple of 1/2 and can be a positive value, zero or a negative value. In the example implementation as shown in the following equation, $l$ = 6, and $b_i(E)$ is the coefficient of the $i$th polynomial and is a function of energy $E$, where $i$ = $-l$, $-(l - 1)$, $-(l - 2)$ ..., 0, 1, 2, ..., or $l$.

$$\sigma(E,T)\approx\sum_{i=-l}^{l}b_i(E)T^{i/2}$$

2. Various specific forms of component function $F_t(\vec{x})$

(1) Legendre polynomials

It is assumed that the space $V$ can be contained in a cuboid space $B$, where the coordinates $(x, y, z)$ of a point $\vec{x}$ in the cuboid space are within the range of the following equation.

$$B=\{\vec{x}=(x,y,z):x_1\le x\le x_2, y_1\le y\le y_2, z_1\le z\le z_2\}$$

Next, the following three equations are used to define $x'$, $y'$, and $z'$.

$$x'=\frac{x-\dfrac{x_1+x_2}{2}}{\dfrac{x_2-x_1}{2}}$$

$$y'=\frac{y-\dfrac{y_1+y_2}{2}}{\dfrac{y_2-y_1}{2}}$$

$$z' = \frac{z - \frac{z_1 + z_2}{2}}{\frac{z_2 - z_1}{2}}$$

Then $x'$, $y'$, and $z'$ each have the range $-1 \leq x', y', z' \leq 1$. The component function $F_t(\vec{x})$ in Equation (f) can be defined as the following equation. In addition, if it is assumed that $0 \leq m \leq M - 1$, $0 \leq n \leq N - 1$, and $0 \leq k \leq K - 1$, then the index $t$ is defined as $t = mNK + nK + k + 1$ and the value range of $t$ is $1 \leq t \leq T = MNK$.

$$F_t(\vec{x}) = C_m^{legendre} C_n^{legendre} C_k^{legendre} P_m(x') P_n(y') P_k(z')$$

$P_m(x')$, $P_n(y')$, $P_k(z')$ are Legendre polynomials as shown in the following equations.

$$P_m(x') = \sum_{i=0}^{m} \binom{m}{i} \binom{-m}{-1} i \left(\frac{1 - x'}{2}\right)^i$$

$$P_n(y') = \sum_{i=0}^{n} \binom{n}{i} \binom{-n}{-1} i \left(\frac{1 - y'}{2}\right)^i$$

$$P_k(z') = \sum_{i=0}^{k} \binom{k}{i} \binom{-k}{-1} i \left(\frac{1 - z'}{2}\right)^i$$

In addition, $C_m^{legendre}, C_n^{legendre}, C_k^{legendre}$ are defined as the following equations.

$$C_m^{legendre} = \sqrt{\frac{2m + 1}{2}}$$

$$C_n^{legendre} = \sqrt{\frac{2n + 1}{2}}$$

$$C_k^{legendre} = \sqrt{\frac{2k + 1}{2}}$$

(2) Zernike polynomials

It is assumed that the space $V$ can be contained in an infinitely-long cylinder with a radius of $R$ and having the central axis passing through the point $(x_0, y_0, 0)$ and perpendicular to the $x$-$y$ plane. Then any point $\vec{x}$ in $V$ can be expressed as the following equation.

$$\vec{x} = (x, y, z) = (x_0 + R\, r\, cos(\phi), y_0 + R\, r\, sin(\phi), z)$$

where the ranges of $r$ and $\varphi$ are $0 \leq r \leq 1$ and $0 \leq \varphi < 2\pi$. The component function $F_t(\overline{x})$ then can be defined as the following equation:

$$F_t(\vec{x}) = Z_n^m(r, \phi)$$

In addition, it is assumed that $0 \leq n \leq N$ - 1, $|m| \leq n$, and the value of m - n is an even number. The value range of the index $t$ is $1 \leq t \leq \frac{(1+N)N}{2}$, and the value of $(m, n)$ in $Z_n^m(r, \phi)$ corresponding to the $t$th term $F_t(\vec{x})$ is given by the $t$th term of an array in the following equation:

$$(m, n) \in \{(0,0), (-1,1), (1,1), (-2,2), (0,2), (2,2), (-3,3), (-1,3)(1,3)(3,3)(-4,4)$$

$$(-2,4), (0,4) \dots (4,4) \dots (-N + 1, N - 1)(-N + 3, N - 1)(-N + 5,$$

$$N - 1) \dots (N - 1, N - 1)\}$$

$Z_n^m(r, \phi)$ is given by the following equation:

$$Z_n^m(r, \phi) = \begin{cases} R_n^m(r)\cos(m\phi) & m > 0 \\ R_n^0(r) & m = 0 \\ R_n^{-m}(r)\sin(m\phi) & m < 0 \end{cases}$$

$R_p^q(r)$ is given by the following equation:

$$R_p^q(r) = \sum_{k=0}^{\frac{p-q}{2}} (-1)^k \binom{p-k}{k} \binom{p-2k}{\frac{p-q}{2}-k} r^{p-2k},$$

*the value of p - q is an even number* $c_{m,n}^{zernike}$ is given by the following equation:

$$c_{m,n}^{zernike} = \begin{cases} \sqrt{\dfrac{n+1}{\pi}} & m = 0 \\ \sqrt{\dfrac{2(n+1)}{\pi}} & m \neq 0 \end{cases}$$

(3) Definition methods of the multi-group cross section and the multi-group flux

A set of $G$ energy groups is given, where the energy groups here refer to energy intervals, the energy intervals are adjacent to each other, and there are a total of $G$ + 1 interval points in the energy intervals, which are represented by $E_g$, where $g$ is an energy group index, that is, an energy interval index, $g$ = 0, 1, 2 ..., or $G$, and the interval points $E_g$ in the energy intervals are arranged in a descending order of energy as shown in the following equation.

$$E_0 \geq E_1 \geq E_2 \geq \cdots \geq E_G$$

Then, there are a total of $G$ energy groups, and the energy groups $g$ have an energy range $[E_g, E_{g-1})$, where $g$ = 1, 2, 3 ..., or $G$.

The microscopic nuclear reaction cross section of the energy group $g$ at the temperature $T$ can be obtained by weighted-averaging the continuous energy microscopic nuclear reaction cross section $\sigma(E, T)$ with a particle flux density $\varphi(E, T)$ as the weight within the energy range of the energy group $g$ as shown in the following equation.

$$\sigma_g(T) = \frac{\int_{E_g}^{E_{g-1}} \sigma(E,T)\phi(E,T)dE}{\int_{E_g}^{E_{g-1}} \phi(E,T)dE}$$

Similarly, the macroscopic nuclear reaction cross section of the energy group $g$ at the temperature $T$ can be obtained by weighted-averaging the continuous energy microscopic nuclear reaction cross section $\Sigma(E, T)$ with a particle flux density $\varphi(E, T)$ as the weight within the energy range of the energy group $g$ as shown in the following equation.

$$\Sigma_g(T) = \frac{\int_{E_g}^{E_{g-1}} \Sigma(E,T)\phi(E,T)dE}{\int_{E_g}^{E_{g-1}} \phi(E,T)dE}$$

In addition, the multi-group particle flux density can be defined as the continuous energy particle flux density $\varphi(E, T)$ integrated within the energy range of the energy group $g$ as shown in the following equation.

$$\phi_g(T) = \int_{E_g}^{E_{g-1}} \phi(E,T)dE$$

As an application of the present application, the present application further provides a particle transport equation solving method, including using the method in at least one of the foregoing embodiments to perform at least one algorithm: Monte Carlo particle transport computation, method of characteristics-based particle transport computation, discrete ordinates method-based particle transport computation, and solving for other scientific computation problems.

That is to say, by using the method in the embodiments of the present application, Monte Carlo method-based particle transport computation, method of characteristics-based particle transport computation, discrete ordinates method-based particle transport computation, and solving for other scientific computation problems can be implemented. Compared with existing methods, the particle transport equation solving method in the embodiments of the present application solves the problem of path integral computation of functions containing cross sections in inhomogeneous media, and improves the path integral statistical method so that the method can be applied to the statistical problems of particle transport in inhomogeneous media.

In correspondence with the method provided in the present application, the present application further provides an apparatus for computing a nuclear reaction cross section and a path integral in particle transport. FIG. 2 is a schematic diagram of the structure of an apparatus 100 for computing a nuclear reaction cross section and a path integral in particle transport provided in the present application. The computation apparatus 100 includes:

a first computation module, configured to obtain a product of a macroscopic nuclear reaction cross section of a material and an additional function by using a linear combination of basis functions; and

a second computation module 120, configured to obtain a path integral of the product of the macroscopic nuclear reaction cross section of the material and the additional function by using the linear combination of basis functions. The additional function is a function of spatial position and energy, where the domain of the function is a set of points in space and a set of non-negative real number energy, and the range of the function is complex numbers or vectors of the complex numbers.

Optionally, the first computation module 110 is configured to obtain the macroscopic nuclear reaction cross section $\Sigma(E, \vec{x})$ by using the leaner combination of basis functions according to Equation (1):

$$\Sigma(E,\vec{x}) \approx \sum_{i=1}^{N} \sum_{j=1}^{M_i} a_i(\vec{x})c_{i,j}\left(T(\vec{x})\right)\sigma_{i,j}(E) \qquad (1)$$

where $N$ is the number of different types of sub-materials of the material, $M_i$ is the number of basis functions of the $i$th-type sub-material, $a_i(\vec{x})$ is the number density of the $i$th-type sub-material, and when the material is a non-homogeneous medium, $a_i(\vec{x})$ is a function of a spatial position $\vec{x}$, $\sigma_{i,j}(E)$ is the $j$th basis function of the $i$th-type sub-material, $c_{i,j}(T(\vec{x}))$ is a coefficient of the jth basis function of the $i$th-type sub-material, $i=1, 2, 3, ...$ or $N$, and $j=1, 2, 3, ...$ or $M_i$.

The first computation module 110 is further configured to obtain the product of the macroscopic nuclear reaction cross section and the additional function by using the linear combination of basis functions according to Equation (2):

$$r(E,\vec{x})\Sigma(E,\vec{x}) \approx \sum_{i=1}^{N}\sum_{j=1}^{M_i} r(E,\vec{x})a_i(\vec{x})c_{i,j}\big(T(\vec{x})\big)\sigma_{i,j}(E) \qquad (2)$$

where $r(E, z)$ is the additional function.

Optionally, the second computation module 120 is configured to integrate Equation (2) on the path $C$, and obtain the path integral of the product of the macroscopic nuclear reaction cross section of the material and the additional function by using the linear combination of basis functions:

$$\oint_C r\big(E,\vec{x}(s)\big)\Sigma\big(E,\vec{x}(s)\big)ds$$

$$\approx \sum_{i=1}^{N}\sum_{j=1}^{M_i}\left(\oint_C r\big(E,\vec{x}(s)\big)a_i\big(\vec{x}(s)\big)c_{i,j}\Big(T(\vec{x}(s))\Big)\,ds\right)\sigma_{i,j}(E) \qquad (3)$$

where the energy is $E$, the temperature is $T(\vec{x})$ and the temperature is a function of a point position $\vec{x}$ in space, a variable $s$ is taken as a parameter of the path $C$, the path $C$ is curved or straight, and $\vec{x}(s)$ is a point position at the parameter $s$ on the path.

Optionally, the computation apparatus 100 further includes a processing module, configured to express the nuclear reaction cross section and the path integral obtained by polynomial expansion as the linear combination of basis functions.

The polynomial expansion is to express the function as a polynomial.

Optionally, the processing module includes:

a sub-computation module 201, configured to obtain the product of the macroscopic nuclear reaction cross section of the material and the additional function through cross section temperature polynomial expansion;
a sub-computation module 202, configured to express the macroscopic nuclear reaction cross section obtained by cross section temperature polynomial expansion as the linear combination of basis functions;
a sub-computation module 203, configured to express the product of the macroscopic nuclear reaction cross section and the additional function obtained by cross section temperature polynomial expansion as the linear combination of basis functions; and
a sub-computation module 204, configured to express the path integral of the product of the macroscopic nuclear reaction cross section and the additional function obtained by cross section temperature polynomial expansion as the linear combination of basis functions.

Optionally, the sub-computation module 201 is configured to obtain a microscopic nuclear reaction cross section through temperature polynomial expansion according to Equation (5):

$$\sigma(E,T) \approx \sum_{l=1}^{L} b_l(E)T^{\beta_l} \qquad (5)$$

where $\sigma(E, T)$ is the microscopic nuclear reaction cross section, $L$ is the number of terms in the polynomial, and $l$ is an index of the polynomial term and $l = 1,2,3 \ldots L$, wherei the $l$th term coefficient $b_l(E)$ is a function of particle energy $E$, $\beta_l$ is the degree of the $l$th term, and $\beta_l$ may be any value.

Optionally, the macroscopic nuclear reaction cross section of the material is obtained through temperature polynomial expansion according to Equation (6), where the macroscopic nuclear reaction cross section of the material is the sum of the products of microscopic nuclear reaction cross sections of various sub-materials and corresponding number densities, as shown in Equation (7):

$$\Sigma(E,T) \approx \sum_{i=1}^{N} \sum_{l=1}^{L_i} a_i \, b_{i,l}(E) T^{\beta_{i,l}} \tag{6}$$

where the lth term coefficient $b_{i,l}(E)$ is a function of particle energy $E$, $\beta_{i,l}$ is the degree of the lth term of the ith-type sub-material, and $\Sigma(E, T)$ is the macroscopic nuclear reaction cross section;

$$\Sigma(E,T) = \sum_{i=1}^{N} a_i \, \sigma_i(E,T) \tag{7}$$

where i is an index of the sub-material and $i = 1,2,3 ... N$, $\sigma_i(E, T)$ is the microscopic nuclear reaction cross section of the ith-type sub-material, $E$ is particle energy, and $T$ is the temperature of the material;
where Equation (6) is expressed as Equation (8) at the spatial position z:

$$\Sigma(E,\vec{x}) \approx \sum_{i=1}^{N} \sum_{l=1}^{L_i} a_i(\vec{x}) b_{i,l}(E) T^{\beta_{i,l}}(\vec{x}) \tag{8}$$

Optionally, the product of the microscopic nuclear reaction cross section and the additional function $r(E, \vec{x})$ is obtained through temperature polynomial expansion according to Equation (9):

$$r(E,\vec{x})\Sigma(E,\vec{x}) \approx \sum_{i=1}^{N} \sum_{l=1}^{L_i} r(E,\vec{x}) a_i(\vec{x}) b_{i,l}(E) T^{\beta_{i,l}}(\vec{x}) \tag{9}$$

where Equation (9) represents the product of the macroscopic nuclear reaction cross section and the additional function.
Optionally, the sub-computation module 202 is configured to define Equation (10), Equation (11), and Equation (12); and

use the definitions of Equation (10), Equation (11), and Equation (12), replace the index l with the index j, and transform Equation (8) into Equation (13);

$$M_i = L_i \tag{10}$$

$$c_{i,j}\big(T(\vec{x})\big) = T^{\beta_{i,l}}(\vec{x}) \tag{11}$$

$$\sigma_{i,j}(E) = b_{i,l}(E) \tag{12}$$

$$\Sigma(E,\vec{x}) \approx \sum_{i=1}^{N} \sum_{j=1}^{M_i} a_i(\vec{x}) c_{i,j}\big(T(\vec{x})\big) \sigma_{i,j}(E) \tag{13}$$

where $\sigma_{i,j}(E)$ is the jth basis function of the ith-type sub-material.

Optionally, the sub-computation module 203 is configured to use the definitions of Equation (10), Equation (11), and Equation (12), replace the index l with the index j, and transform Equation (9) into Equation (14):

$$r(E,\vec{x})\Sigma(E,\vec{x}) \approx \sum_{i=1}^{N} \sum_{j=1}^{M_i} r(E,\vec{x}) a_i(\vec{x}) c_{i,j}\big(T(\vec{x})\big) \sigma_{i,j}(E) \tag{14}$$

where Equation (14) represents the product of the macroscopic nuclear reaction cross section and the additional function by using the linear combination of basis functions.

Optionally, the sub-computation module 204 is configured to perform integration on the path $C$ according to Equation (9) to obtain Equation (15):

$$\oint_C r\big(E, \vec{x}(s)\big) \Sigma\big(E, \vec{x}(s)\big) ds$$

$$\approx \sum_{i=1}^{N} \sum_{l=1}^{L_i} \left( \oint_C r\big(E, \vec{x}(s)\big) a_i\big(\vec{x}(s)\big) T^{\beta_{i,l}}\big(\vec{x}(s)\big) ds \right) b_{i,l}(E) \qquad (15)$$

Optionally, the definitions of Equation (10), Equation (11), and Equation (12) are used, the index $l$ is replaced with the index $j$, and Equation (15) is transformed into Equation (16):

$$\oint_C r\big(E, \vec{x}(s)\big) \Sigma\big(E, \vec{x}(s)\big) ds$$

$$\approx \sum_{i=1}^{N} \sum_{j=1}^{M_i} \left( \oint_C r\big(E, \vec{x}(s)\big) a_i\big(\vec{x}(s)\big) c_{i,j}\left( T\big(\vec{x}(s)\big) \right) ds \right) \sigma_{i,j}(E) \qquad (16)$$

where $\sigma_{i,j}(E)$ is the linear combination of basis functions, and Equation (16) represents the path integral of the product of the macroscopic nuclear reaction cross section and the additional function obtained by using the linear combination of basis functions.

The present application further provides an electronic device, including: a processor and a memory having computer program instructions stored thereon, where when executing the computer program instructions, the electronic device implements the method according to any one of the foregoing embodiments.

FIG. 3 is a schematic diagram of the hardware structure of an electronic device for implementing a method for computing a nuclear reaction cross section and a path integral in particle transport according to the embodiments of the present application.

As shown in FIG. 3, the electronic device may include a processor 601 and a memory 120 having computer program instructions stored thereon.

Specifically, the processor 601 may include at least one of the following: a central processing unit (CPU), a graphics processing unit (GPU), a neural network chip, and a field programmable gate array (FPGA) computation chip.

The memory 602 may include a large-capacity memory for data or instructions. For the purpose of exemplification instead of limitation, the memory 602 may include a hard disk drive (HDD), a floppy disk drive, a flash memory, an optical disk, a magneto-optical disk, a magnetic tape, or a universal serial bus (USB) drive or a combination of two or more of the components. In appropriate cases, the memory 602 may include a removable or non-removable (or fixed) medium. In appropriate cases, the memory 602 may be inside or outside an integrated gateway disaster recovery device. In a specific embodiment, the memory 602 is a non-volatile solid-state memory.

The memory may include a read-only memory (ROM), a random access memory (RAM), a magnetic disk storage medium device, an optical storage medium device, a flash memory device, and electrical, optical or other physical/tangible memory storage devices. Thus, typically, the memory includes one or more tangible (non-transitory) computer-readable storage media (e.g., memory devices) encoded with software including computer-executable instructions, and when the software is executed (e.g., by one or more processors), the software is operable to perform the operations described with reference to the method according to an aspect of the present disclosure.

The processor 601 reads and executes the computer program instructions stored in the memory 602 to implement parallel computation of the nuclear reaction cross section value and the path integral in particle transport in the foregoing embodiments.

In one example, the electronic device may further include a communication interface 603 and a bus 610. As shown in FIG. 4 , the processor 601, the memory 602, and the communication interface 603 are connected via the bus 610 and communicate with each other. The electronic device in the embodiments of the present application may be a server or another computation device, or may be a cloud server.

The communication interface 603 is mainly configured to implement communication between various modules, apparatuses, units and/or devices in the embodiments of the present application.

The bus 610 includes hardware, software or both, and couples components of an online data traffic billing device to each other. For the purpose of exemplification instead of limitation, the bus may include an accelerated graphics port (AGP) or another graphics bus, an extended industry standard architecture (EISA) bus, a front-side bus (FSB), a hypertransport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local (VLB) bus or other suitable buses or a combination of two or more of these components. In appropriate cases, the bus 610 may include one or more buses. Although the embodiments of the present application describe and show specific buses, the present application considers any suitable bus or interconnect.

In addition, the embodiments of the present application can provide a computer storage medium for implementing the method for computing a nuclear reaction cross section and a path integral in particle transport in the foregoing embodiments. The computer storage medium stores computer program instructions. When the computer program instructions are executed by a processor, the method for computing a nuclear reaction cross section and a path integral in particle transport in the foregoing embodiments is implemented.

It should be noted that the present application is not limited to the specific configurations and processing described above and shown in the figures. For the sake of conciseness, the detailed description for the known method is omitted here. In the foregoing embodiments, several specific steps are described and shown as examples. However, the method process of the present application is not limited to the specific steps described and shown, and a person skilled in the art can make various changes, modifications and additions, or change the order of the steps after understanding the spirit of the present application.

The functional blocks shown in the structural block diagrams described above can be implemented as hardware, software, firmware or a combination thereof. When implemented as hardware, the functional blocks can be, for example, electronic circuits, application-specific integrated circuits (ASICs), appropriate firmware, plug-ins, function cards, etc. When implemented as software, the elements in the present application are programs or code segments used to execute required tasks. The programs or code segments can be stored in a machine-readable medium, or transmitted on a transmission medium or a communication link via a data signal carried in a carrier. The "machine-readable medium" may include any medium capable of storing or transmitting information. The machine-readable medium may include a non-transient computer-readable storage medium, such as an electronic circuit, a semiconductor memory device, a ROM, a flash memory, an erasable ROM (EROM), a floppy disk, a CD-ROM, an optical disk, a hard disk, and an optical fiber medium, and the machine-readable medium may also include a radio frequency (RF) link, etc. The code segments can be downloaded via a computer network such as the Internet and an intranet.

It should also be noted that although the exemplary embodiments mentioned in the present application describe some methods or systems based on a series of steps or apparatuses, the present application is not limited to the order of the steps above. That is to say, the steps can be performed in the order mentioned in the embodiments, or can be performed in an order different from that in the embodiments, or several steps can be performed simultaneously.

The aspects of the present disclosure are described above with reference to flowcharts and/or block diagrams of the method, apparatus (system), and computer program product according to the embodiments of the present disclosure. It should be understood that each block of the flowcharts and/or block diagrams, and combinations of the blocks in the flowcharts and/or block diagrams can be implemented by computer program instructions. The computer program instructions may be provided to a processor of a general-purpose computer, a special-purpose computer, or another programmable data processing apparatus to produce a machine, such that the instructions executed by the processor of the computer or another programmable data processing apparatus enable implementation of the functions/acts specified in one or more blocks of the flowcharts and/or block diagrams. The processor may be, but is not limited to, a general-purpose processor, a special-purpose processor, a special application processor, or a field programmable logic circuit. It should also be understood that each block in the block diagrams and/or flowcharts, and combinations of blocks in the block diagrams and/or flowcharts, can also be implemented by special-purpose hardware that executes specified functions or acts or implemented by combinations of special-purpose hardware and computer instructions.

Specific implementations of the present application are described above. A person skilled in the art can clearly know that for convenience and conciseness of description, reference can be made to corresponding process descriptions in the foregoing method embodiments for the working processes of the systems, modules, and units described above, and details are not described herein again. It should be understood that the scope of protection of the present application are not limited thereto. Any technician familiar with this technical field can easily conceive of various equivalent modifications or replacement within the scope of the present application, and these modifications or replacements should be included in the scope of protection of the present application.

**Claims**

1. A method for computing a nuclear reaction cross section and a path integral in particle transport, comprising:

   obtaining a product of a macroscopic nuclear reaction cross section of a material and an additional function by using a linear combination of basis functions; and
   obtaining a path integral of the product of the macroscopic nuclear reaction cross section of the material and the additional function by using the linear combination of basis functions;
   wherein the additional function is a function of spatial position and energy, wherein the domain of the function is a set of points in space and a set of non-negative real number energy, and the range of the function is complex numbers or vectors of the complex numbers.

2. The method according to claim 1, wherein the obtaining a product of a macroscopic nuclear reaction cross section of a material and an additional function by using a linear combination of basis functions comprises:

   as shown in Equation (1), obtaining the macroscopic nuclear reaction cross section $\Sigma(E, \vec{x})$ by using the linear combination of basis functions:

   $$\Sigma(E, \vec{x}) \approx \sum_{i=1}^{N} \sum_{j=1}^{M_i} a_i(\vec{x}) c_{i,j}\left(T(\vec{x})\right) \sigma_{i,j}(E) \qquad (1)$$

   wherein $N$ is the number of different types of sub-materials of the material, $M_i$ is the number of basis functions of the $i$th-type sub-material, $a_i(\vec{x})$ is the number density of the $i$th-type sub-material, and when the material is a non-homogeneous medium, $a_i(\vec{x})$ is a function of a spatial position $\vec{x}$, $\sigma_{i,j}(E)$ is the $j$th basis function of the $i$th-type sub-material, $c_{i,j}(T(\vec{x}))$ is a coefficient of the $j$th basis function of the $i$th-type sub-material, $i$=1, 2, 3, ... or $N$, and $j$=1, 2, 3, ... or $M_i$; and
   as shown in Equation (2), obtaining the product of the macroscopic nuclear reaction cross section and the additional function by using the linear combination of basis functions:

   $$r(E, \vec{x})\Sigma(E, \vec{x}) \approx \sum_{i=1}^{N} \sum_{j=1}^{M_i} r(E, \vec{x}) a_i(\vec{x}) c_{i,j}\left(T(\vec{x})\right) \sigma_{i,j}(E) \qquad (2)$$

   wherein $r(E, \vec{x})$ is the additional function.

3. The method according to claim 2, wherein Equation (2) is integrated on a path $C$, and the path integral of the product of the macroscopic nuclear reaction cross section of the material and the additional function is obtained by using the linear combination of basis functions:

   $$\oint_C r\left(E, \vec{x}(s)\right)\Sigma\left(E, \vec{x}(s)\right)ds \approx \sum_{i=1}^{N} \sum_{j=1}^{M_i} \left(\oint_C r\left(E, \vec{x}(s)\right) a_i\left(\vec{x}(s)\right) c_{i,j}\left(T(\vec{x}(s))\right) ds\right) \sigma_{i,j}(E) \quad (3)$$

   wherein the energy is $E$, the temperature is $T(\vec{x})$ and the temperature is a function of a point position $\vec{x}$ in space, a variable s is taken as a parameter of the path $C$, the path $C$ is curved or straight, and $\vec{x}(s)$ is a point position at the parameter $s$ on the path.

4. The method according to claim 3, wherein when a multi-group cross section is used, the energy $E$ in Equation (3) is replaced by an energy group $g$, and then Equation (3) is transformed into Equation (4):

   $$\oint_C r_g\left(\vec{x}(s)\right)\Sigma_g\left(\vec{x}(s)\right)ds \approx \sum_{i=1}^{N} \sum_{j=1}^{M_i} \left(\oint_C r_g\left(\vec{x}(s)\right) a_i\left(\vec{x}(s)\right) c_{i,j}\left(T(\vec{x}(s))\right) ds\right) \sigma_{i,j,g} \quad (4)$$

wherein a macroscopic nuclear reaction cross section of the energy group $g$ is $\Sigma_g(\vec{x}(s))$, the basis function corresponding to the energy group $g$ is $\sigma_{i,j,g}$, and the additional function corresponding to the energy group $g$ is $r_g(\vec{x}(s))$.

5. The method according to claim 1, further comprising expressing the nuclear reaction cross section and the path integral obtained by polynomial expansion as the linear combination of basis functions;
   wherein the polynomial expansion is to express the function as a polynomial.

6. The method according to claim 5, wherein the expressing the nuclear reaction cross section and the path integral obtained by polynomial expansion as the linear combination of basis functions comprises:

   obtaining the product of the macroscopic nuclear reaction cross section of the material and the additional function through cross section temperature polynomial expansion;
   expressing the macroscopic nuclear reaction cross section obtained by cross section temperature polynomial expansion as the linear combination of basis functions;
   expressing the product of the macroscopic nuclear reaction cross section and the additional function obtained by cross section temperature polynomial expansion as the linear combination of basis functions; and
   expressing the path integral of the product of the macroscopic nuclear reaction cross section and the additional function obtained by cross section temperature polynomial expansion as the linear combination of basis functions.

7. The method according to claim 6, wherein the obtaining the product of the macroscopic nuclear reaction cross section of the material and the additional function through cross section temperature polynomial expansion comprises:

   as shown in Equation (5), obtaining a microscopic nuclear reaction cross section by using temperature polynomial expansion:

$$\sigma(E,T) \approx \sum_{l=1}^{L} b_l(E) T^{\beta_l} \qquad (5)$$

   wherein $\sigma(E, T)$ is the microscopic nuclear reaction cross section, $L$ is the number of terms in the polynomial, and $l$ is an index of the polynomial term and $l = 1, 2, 3 \ldots$, or $L$, wherein the $l$th term coefficient $b_l(E)$ is a function of particle energy $E$, $\beta_l$ is the degree of the $l$th term, and $\beta_l$ may be any value;
   as shown in Equation (6), obtaining the macroscopic nuclear reaction cross section of the material by using temperature polynomial expansion, wherein the macroscopic nuclear reaction cross section of the material is the sum of the products of microscopic nuclear reaction cross sections of various sub-materials and corresponding number densities, as shown in Equation (7):

$$\Sigma(E,T) \approx \sum_{i=1}^{N} \sum_{l=1}^{L_i} a_i \, b_{i,l}(E) T^{\beta_{i,l}} \qquad (6)$$

   wherein the $l$th term coefficient $b_{i,l}(E)$ is a function of particle energy $E$, $\beta_{i,l}$ is the degree of the $l$th term of the $i$th-type sub-material, $\Sigma(E, T)$ is the macroscopic nuclear reaction cross section, and $L_i$ is the number of terms in the polynomial;

$$\Sigma(E,T) = \sum_{i=1}^{N} a_i \, \sigma_i(E,T) \qquad (7)$$

   wherein $i$ is an index of the sub-material and $i = 1, 2, 3 \ldots$, or $N$, $\sigma_i(E, T)$ is the microscopic nuclear reaction cross section of the $i$th-type sub-material, $E$ is particle energy, and $T$ is the temperature of the material;
   wherein Equation (6) is expressed as Equation (8) at the spatial position $z$:

$$\Sigma(E,\vec{x}) \approx \sum_{i=1}^{N}\sum_{l=1}^{L_i} a_i(\vec{x})b_{i,l}(E)T^{\beta_{i,l}}(\vec{x}) \qquad (8)$$

as shown in Equation (9), obtaining the product of the microscopic nuclear reaction cross section and the additional function $r(E, z)$ by using temperature polynomial expansion:

$$r(E,\vec{x})\Sigma(E,\vec{x}) \approx \sum_{i=1}^{N}\sum_{l=1}^{L_i} r(E,\vec{x})a_i(\vec{x})b_{i,l}(E)T^{\beta_{i,l}}(\vec{x}) \qquad (9)$$

wherein Equation (9) represents the product of the macroscopic nuclear reaction cross section and the additional function.

8. The method according to claim 7, wherein the expressing the macroscopic nuclear reaction cross section obtained by cross section temperature polynomial expansion as the linear combination of basis functions comprises:

defining Equation (10), Equation (11), and Equation (12):

$$M_i = L_i \qquad (10)$$

$$c_{i,j}\big(T(\vec{x})\big) = T^{\beta_{i,l}}(\vec{x}) \qquad (11)$$

$$\sigma_{i,j}(E) = b_{i,l}(E) \qquad (12)$$

using the definitions of Equation (10), Equation (11), and Equation (12), replacing the index $l$ with the index $j$, and transforming Equation (8) into Equation (13);

$$\Sigma(E,\vec{x}) \approx \sum_{i=1}^{N}\sum_{j=1}^{M_i} a_i(\vec{x})c_{i,j}\big(T(\vec{x})\big)\sigma_{i,j}(E) \qquad (13)$$

wherein $\sigma_{i,j}(E)$ is the $j$th basis function of the $i$th-type sub-material;.

9. The method according to claim 8, wherein the expressing the product of the macroscopic nuclear reaction cross section and the additional function obtained by cross section temperature polynomial expansion as the linear combination of basis functions comprises:

using the definitions of Equation (10), Equation (11), and Equation (12), replacing the index $l$ with the index $j$, and transforming Equation (9) into Equation (14):

$$r(E,\vec{x})\Sigma(E,\vec{x}) \approx \sum_{i=1}^{N}\sum_{j=1}^{M_i} r(E,\vec{x})a_i(\vec{x})c_{i,j}\big(T(\vec{x})\big)\sigma_{i,j}(E) \qquad (14)$$

wherein Equation (14) represents the product of the macroscopic nuclear reaction cross section and the additional function by using the linear combination of basis functions.

10. The method according to claim 8, wherein the expressing the path integral of the product of the macroscopic nuclear reaction cross section and the additional function obtained by cross section temperature polynomial expansion as the linear combination of basis functions comprises:

integrating Equation (9) on the path $C$ to obtain Equation (15):

$$\oint_C r(E,\vec{x}(s))\Sigma(E,\vec{x}(s))ds \approx \sum_{i=1}^{N}\sum_{l=1}^{L_i}\left(\oint_C r(E,\vec{x}(s))a_i(\vec{x}(s))T^{\beta_{i,l}}(\vec{x}(s))ds\right)b_{i,l}(E) \quad (15)$$

using the definitions of Equation (10), Equation (11), and Equation (12), replacing the index $l$ with the index $j$, and transforming Equation (15) into Equation (16):

$$\oint_C r(E,\vec{x}(s))\Sigma(E,\vec{x}(s))ds \approx \sum_{i=1}^{N}\sum_{j=1}^{M_i}\left(\oint_C r(E,\vec{x}(s))a_i(\vec{x}(s))c_{i,j}\left(T(\vec{x}(s))\right)ds\right)\sigma_{i,j}(E) \quad (16)$$

wherein $\sigma_{i,j}(E)$ is the linear combination of basis functions, and Equation (16) represents the path integral of the product of the macroscopic nuclear reaction cross section and the additional function obtained by using the linear combination of basis functions.

11. A particle transport equation solving method, comprising using the method according to any one of claims 1-10 to perform at least one of the following: Monte Carlo particle transport computation, method of characteristics-based particle transport computation, and discrete ordinates method-based particle transport computation.

12. An apparatus for computing a nuclear reaction cross section and a path integral in particle transport, comprising:

   a first computation module, configured to obtain a product of a macroscopic nuclear reaction cross section of a material and an additional function by using a linear combination of basis functions; and
   a second computation module, configured to obtain a path integral of the product of the macroscopic nuclear reaction cross section of the material and the additional function by using the linear combination of basis functions;
   wherein the additional function is a function of spatial position and energy, wherein the domain of the function is a set of points in space and a set of non-negative real number energy, and the range of the function is complex numbers or vectors of the complex numbers.

13. An electronic device, comprising a processor and

   a memory having computer program instructions stored thereon;
   wherein when executing the computer program instructions, the electronic device implements the method according to any one of claims 1-10.

14. The electronic device according to claim 13, wherein the electronic device is a computer, or the electronic device refers to a plurality of computers that implement distributed computation, or the electronic device is a computation network formed by a plurality of computers.

15. The electronic device according to claim 13, wherein the processor is adapted to perform parallel computation of a nuclear reaction cross section value and a path integral in particle transport.

16. The electronic device according to claim 13, wherein the processor comprises at least one of the following: a central processing unit (CPU), a graphics processing unit (GPU), a neural network chip, and a field programmable gate array (FPGA) computation chip.

17. A computer readable storage medium, having computer program instructions stored thereon, wherein when executed by a processor, the computer program instructions implement the method according to any one of claims 1-10.

S101

Obtain a product of a macroscopic nuclear reaction cross section of a material and an additional function by using a linear combination of basis functions

S102

Obtain a path integral of the product of the macroscopic nuclear reaction cross section of the material and the additional function by using the linear combination of basis functions, where the additional function is a function of spatial position and energy, where the domain of the function is a set of points in space and a set of non-negative real number energy, and the range of the function is complex numbers or vectors of the complex numbers

FIG. 1

100

First computation module 110

Second computation module 120

FIG. 2

601

Processor

602

Memory

603

Communication interface

Bus 610

FIG. 3

# EP 4 471 625 A1

<table>
<tr><td colspan="2">INTERNATIONAL SEARCH REPORT</td><td colspan="2">International application No.<br>**PCT/CN2022/131119**</td></tr>
</table>

**A.    CLASSIFICATION OF SUBJECT MATTER**

G06F 17/15(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 非均匀, 介质, 粒子, 粒子, 输运, 基底, 函数, 路径, 积分, 核反应, 截面, non uniform, medium, particle, transport, substrate, function, path, integration, nuclear, reaction, cross section

**C.    DOCUMENTS CONSIDERED TO BE RELEVANT**

| Category* | Citation of document, with indication, where appropriate, of the relevant passages | Relevant to claim No. |
|---|---|---|
| A | CN 107122546 A (XI'AN JIAOTONG UNIVERSITY) 01 September 2017 (2017-09-01) description, paragraphs [0267]-[0514] | 1-17 |
| A | CN 112966428 A (TSINGHUA UNIVERSITY) 15 June 2021 (2021-06-15) entire document | 1-17 |
| A | WO 2021197291 A1 (LIU CHANGYUAN) 07 October 2021 (2021-10-07) entire document | 1-17 |
| A | CN 108008289 A (NORTHWEST INSTITUTE OF NUCLEAR TECHNOLOGY) 08 May 2018 (2018-05-08) entire document | 1-17 |
| A | US 2014140461 A1 (LITTLE, R. B.) 22 May 2014 (2014-05-22) entire document | 1-17 |

☐ Further documents are listed in the continuation of Box C.        ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **18 December 2022** | **23 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/131119**

| Patent document cited in search report | | | Publication date (day/month/year) | Patent family member(s) | Publication date (day/month/year) |
|---|---|---|---|---|---|
| CN | 107122546 | A | 01 September 2017 | None | |
| CN | 112966428 | A | 15 June 2021 | None | |
| CN | 108008289 | A | 08 May 2018 | None | |
| US | 2014140461 | A1 | 22 May 2014 | None | |

Form PCT/ISA/210 (patent family annex) (January 2015)